# EUROPEAN PATENT SPECIFICATION

(11) **EP 3 368 588 B1**
(45) Date of publication and mention of the grant of the patent: **20.11.2019**
(21) Application number: 16805918.6
(22) Date of filing: 24.10.2016
(51) Int. Cl.: C08G 73/02, D04H 1/64, C08L 79/00, C08L 79/08

(54) **CURABLE AQUEOUS COMPOSITIONS HAVING IMPROVED WET TENSILE STRENGTH AND USES THEREOF**
HÄRTBARE WÄSSRIGE ZUSAMMENSETZUNGEN MIT VERBESSERTER NASSZUGFESTIGKEIT UND DEREN VERWENDUNGEN
COMPOSITIONS AQEUSES DURCISSABLES AYANT UNE RÉSISTANCE À LA TRACTION AU MOUILLÉ AMELIORÉE ET UTILISATIONS DE CELLES-CI

(30) Priority: 30.10.2015 US 201562248414 P
(43) Date of publication of application: 05.09.2018
(73) Proprietor: Rohm and Haas Company, Philadelphia, PA 19106 (US); Dow Global Technologies, LLC, Midland, MI 48674 (US)
(72) Inventor: ENDRES, Silvia Isabel, Midland, Michigan 48674 (US); FINCH, William C., Collegeville, PA 19426 (US); WILLIAMS, Drew E., Collegeville, PA 19426 (US)
(74) Representative: Beck Greener LLP
(86) International application number: PCT/US2016/058419
(87) International publication number: WO 2017/074853

(56) References cited:
- EP-A1- 1 741 726
- US-A1- 2009 275 699
- US-A1- 2012 064 323

## Description

The present invention relates to curable aqueous compositions having improved wet tensile strength, to methods of use thereof as binders for fibrous substrates and articles, such as nonwovens, and to the products produced by those methods. More particularly, the present invention relates to aqueous thermosetting binder compositions comprising one or more polyacid, one or more polyol, pentaerythritol and an azetidinium group containing resin, and the use thereof as binders for heat-resistant fibers and nonwovens.

In stone and glass wool production, phenol formaldehyde resins are conventionally used to bond fibrous material and form mechanically intact insulation material. Production processes have been designed around this binder family because of their excellent cost/performance ratio. In recent years, mineral wool producers have switched to lower-cost carbohydrate containing thermosetting binders that are formaldehyde free. In the changeover to these binders, several technical challenges remain that keep them from taking over the entire market, in particular, water resistance, such as mechanical performance under wet or humid conditions. However, ingredients which do not form part of the cured matrix are not and can be burnished and, thus, removed from the substrate.

U.S. patent publication no 2004/0082241, to Rodriguez et al., discloses aqueous curable binder compositions of a copolymer binder having both an acid and a hydroxyl functionality, and a polyamine, such as a polyamideamines of epichorohydrin, as a crosslinking agent. The compositions may further comprise a catalyst such as phosphorus containing catalyst. The Rodriguez compositions are low in solids content, are too expensive for commercial use and fail to provide a sustainable or biobased binder. In addition, Rodriguez does not recognize any wet strength advantage.

Accordingly, the present inventors have endeavored to provide curable or thermosetting aqueous compositions for fibrous substrates and composites that enable improved wet tensile strength in carbohydrate containing, substantially formaldehyde free curable aqueous compositions.

### STATEMENT OF THE INVENTION

1. In accordance with the present invention, curable aqueous compositions comprise (i) one or more polyacid comprising at least two carboxylic acid groups, or salts thereof, preferably, a combination of at least one polymeric polyacid and an organic polybasic acid; (ii) a mixture of two or more polyols including pentaerythritol and one or more additional polyol having at least two hydroxyl groups; (iii) from 0.5 to 12 wt.%, preferably, from 1 to 5 wt.%, based on the total solids weight of the curable aqueous compositions, of one or more azetidinium group containing resins, and (iv) from 25 to 70 wt.%, or, preferably, from 30 to 60 wt.%, based on the total solids weight of the curable aqueous compositions, of one or more carbohydrate, wherein the ratio of the number of equivalents of the carboxylic acid groups or salts thereof in the (i) one or more polyacid, to the total number of equivalents of the hydroxyl groups in the (ii) mixture of two or more polyols is from 1/0.01 to 1/10, or, preferably, from 1/0.2 to 1/3, or, more preferably, from 1/0.2 to 1/1.
2. In accordance with the curable aqueous compositions of item 1, above, wherein the compositions further comprise (v) one or more phosphorous-containing accelerator.
3. In accordance with the curable aqueous compositions of any one of items 1 or 2, above, wherein the (i) one or more polyacids comprise polymeric polyacids, preferably polyacrylic acid (pAA), and pAA aqueous solution copolymers.
4. In accordance with the curable aqueous compositions of any one of items 1, 2 or 3, above, wherein the one or more additional polyols in the (ii) mixture of polyols comprises a dihydric polyol or a trihydric polyol, preferably, triethanolamine (TEA), glycerol, diethanolamine or trimethylolpropane (TMP).
5. In accordance with the curable aqueous compositions of any one of items 1, 2, 3, or 4, above, wherein the (i) one or more polyacid is a polymeric polyacid present as a carboxylate salt of alkanolamines with at least two hydroxyl groups that are (ii) additional polyols, such as, for example, diethanolamine, triethanolamine, dipropanolamine, and di-isopropanolamine.
6. In accordance with the curable aqueous compositions of any one of items 1, 2, 3, 4, or 5, above, wherein the (iii) azetidinium group containing resins are chosen from the aminoamides of epihalohydrin, such as, preferably, the aminoamides of epichlorohydrin.
7. In accordance with the curable aqueous compositions of any one of items 1 to 6, above, wherein the (iv) one or more carbohydrate is chosen from one or more monosaccharides, disaccharides, sugar alcohols or polysaccharides, preferably, a polysaccharide chosen from a starch or a maltodextrin, or, preferably, a reducing sugar.
8. In accordance with the curable aqueous compositions of any one of items 1 to 7, above, wherein the curable aqueous composition has a pH of from 2 to 8, or, preferably 2 to 6.
9. In accordance with the curable aqueous compositions of any one of items 1 to 8, above, wherein, preferably, to lower the viscosity of the composition, the curable aqueous compositions further comprise one or more strong acid catalyst having a pKa of ≤ 3.0, such as a mineral acid, and may have a pH of ≤ 4.5, preferably ≤ 3.5.
10. In a second aspect, the present invention comprises curable aqueous compositions comprising (i-A) from 10 to 50 wt.%, preferably, from 15 to 30 wt.% based on the total solids weight of the curable aqueous compositions, of one or more amine containing inorganic stabilizers; (iii) from 0.5 to 12 wt.%, preferably, from 1 to 5 wt.%, based on the total solids weight of the curable aqueous compositions, of one or more azetidinium group containing resins, and (iv) from 38 to 89.5 wt.% , based on the total solids weight of the curable aqueous compositions, of one or more carbohydrate, preferably, a reducing sugar.
11. In accordance with the curable aqueous compositions of item 10, above, wherein the (i-A) amine containing inorganic stabilizers are chosen from amine acid salts of inorganic acids and ammonia acid salts or inorganic acids, such as, ammonium salts of sulfuric acid, nitric acid, hydrochloric acid, phosphoric acid, phosphorous acid, carbonic acid, tungstic acid, such as ammonium tungstate, para and meta, ammonium polyphosphates, and mixed salts thereof, preferably, having a pKa of 7.5 or less, or, preferably, ammonium bicarbonate, ammonium nitrate or ammonium sulfate. Such amine containing inorganic stabilizers may be mono-basic, or dibasic, or polybasic depending on the acid. For example, phosphoric acid (H₃PO₄) has potentially three acidic protons. Thus, for example, ammonium phosphate monobasic, (NH₄)H₂PO₄, ammonium phosphate dibasic, (NH₄)₂HPO₄, and ammonium phosphate tribasic, (NH₄)₃PO₄, may find use in the binder composition of this invention. Mixed ammonium salts of phosphoric acid are also contemplated such as ammonium sodium phosphate, (NH₄)₂NaPO₄, and ammonium sodium hydrogen phosphate Na(NH₄)HPO₄. As used herein, the term "ammonium" includes "alkyl ammonium".
12. In accordance with the curable aqueous compositions of any one of items 10 or 11, above, wherein the pH of the aqueous binder composition minimizes corrosion of any mixing or storage or processing equipment and ranges from 7 to 12, for example, less than or equal to about 10.
13. In another aspect of the present invention, methods for treating, coating or impregnating fibers and fibrous article substrates, such as nonwovens, heat-resistant nonwovens like fiberglass insulation, comprise forming a curable aqueous composition comprising admixing with water or one or more aqueous solvent (i) one or more polyacid comprising at least two carboxylic acid groups, or salts thereof, preferably, a combination of at least one polymeric polyacid and an organic polybasic acid; (ii) a mixture of two or more polyols including pentaerythritol and one or more additional polyol having at least two hydroxyl groups; (iii) from 0.5 to 12 wt.%, preferably, from 1 to 5 wt.%, based on the total solids weight of the curable aqueous compositions, of one or more azetidinium group containing resins, and (iv) from 30 to 70 wt.% , based on the total solids weight of the curable aqueous compositions, of one or more carbohydrate, wherein the ratio of the number of equivalents of the carboxylic acid groups, or salts thereof in the (i) one or more polyacid to the total number of equivalents of said hydroxyl groups in the (ii) mixture of two or more polyols is from 1/0.01 to 1/10, or, preferably, from 1/0.2 to 1/3, or, more preferably, from 1/0.2 to 1/1;
   contacting the substrate with the curable aqueous composition or, alternatively, applying the curable aqueous composition to the substrate; and
   heating the curable aqueous composition at a temperature of from 100°C to 400°C.
14. In accordance with methods of 13, above, the curable aqueous composition can be the composition of any one of items 1 to 9, above.
15. In yet another aspect of the present invention, methods for treating, coating or impregnating fibers and fibrous substrates, such as nonwovens or heat-resistant nonwovens, like fiberglass insulation, comprise forming a curable aqueous composition comprising admixing with water or one or more aqueous solvent (i-A) from 10 to 50 wt.%, preferably, from 15 to 30 wt.% based on the total solids weight of the curable aqueous compositions, of one or more amine containing inorganic stabilizers; (iii) from 0.5 to 12 wt.%, preferably, from 1 to 5 wt.%, based on the total solids weight of the curable aqueous compositions, of one or more azetidinium group containing resins, and (iv) from 45 to 89.5 wt.% , based on the total solids weight of the curable aqueous compositions, of one or more carbohydrate, preferably, a reducing sugar;
   contacting the substrate with the curable aqueous composition or, alternatively, applying the curable aqueous composition to the substrate; and
   heating the curable aqueous composition at a temperature of from 100°C to 400°C.
16. In yet still another aspect of the present invention, fibrous articles or non-woven articles are prepared by the methods of any of items 13 to 15, above, including heat-resistant nonwovens, e.g. fiberglass insulation, and composites, such as sheets or ceiling panels.

As used herein, the phrase "addition polymer" refers to any (co)polymer that comprises ethylenically unsaturated monomers as (co)polymerized units, such as poly(acrylic acid) (pAA).

As used herein, the phrase "alkyl" means any aliphatic alkyl group having one or more carbon atoms, the alkyl group including n-alkyl, s-alkyl, i-alkyl, t-alkyl groups or cyclic aliphatics containing one or more 5, 6 or seven member ring structures.

As used herein, the phrase "aqueous" includes water and mixtures comprising water and water-miscible solvents and an "aqueous composition" can be a granular or spray dried composition having water only in the form of hydrates of salts or acids.

As used herein, the phrase "based on the total solids" refers to weight amounts of any given ingredient in comparison to the total weight amount of all of the nonvolatile ingredients in the binder (e.g. polyacids, polyols, polymers or resins, carbohydrates, stabilizers, silanes, fillers &tc).

As used herein, the phrase "DE" or "dextrose equivalent" refers to the "reducing sugar content expressed as dextrose percentage on dry matter" and is used to characterize the molecular weight of polysaccharides. See Handbook of Starch Hydrolysis Products and Their Derivatives (Page 86, 1995 By M. W. Kearsley, S. Z. Dziedzic Its theoretical value which is inversely proportional to number average molecular weight (Mn), is calculated as DE = Mglucose/Mn × 100 or 180/Mn X 100. See Rong Y, Sillick M, Gregson CM. "Determination Of Dextrose Equivalent Value And Number Average Molecular Weight Of Maltodextrin By Osmometry", J Food Sci. 2009 Jan-Feb;74(1), pp. C33-C40. For example, dextrose has a DE of 100 while pure starch (e.g. corn) has a DE value of 0.)

As used herein, unless otherwise indicated, the phrase "copolymer" includes, independently, copolymers, terpolymers, block copolymers, segmented copolymers, graft copolymers, and any mixture or combination thereof.

As used herein, the phrase "substantially formaldehyde-free" refers to compositions free from added formaldehyde, and which do not liberate substantial formaldehyde as a result of drying and/or curing. Preferably, such binder or material that incorporates the binder liberates less than 100 ppm of formaldehyde, more preferably less than 25 and most preferably less than 5 ppm of formaldehyde, as a result of drying and/or curing the binder.

As used herein, the phrase "heat-resistant fibers" means fibers which are substantially unaffected by exposure to temperatures of from 125°C to 400°C during processing.

As used herein, the term "maleic" comprises either maleic acid or maleic anhydride independently of each other, unless otherwise indicated.

As used herein, the term "(meth)acrylate" means acrylate, methacrylate, and mixtures thereof and the term "(meth)acrylic" used herein means acrylic, methacrylic, and mixtures thereof.

As used herein, unless otherwise indicated, the phrase "molecular weight" refers to the weight average molecular weight of a polymer as measured by gel permeation chromatography (GPC), where the GPC is measured against polyacrylic acid standards if the polymer is water soluble and against polystyrene standards if the polymer is water dispersible.

As used herein the "pKa" of a stabilizer will be treated as the pKa of the most acidic proton of an acid stabilizer or the lowest pKa of the acid or salt stabilizer, i.e. the pKa of the strongest proton or base conjugate is understood.

As used herein, the phrase "polybasic" means having at least two reactive acid functional groups or salts or anhydrides thereof (see e.g. Hawley's Condensed Chemical Dictionary, 14th Ed., 2002, John Wiley and Sons, Inc.).

As used herein, the phrases "polyol" and "polyhydroxy" refer to organic compounds or structural portions of organic compounds containing two or more hydroxy groups.

As used herein, the phrase "wt.%" stands for weight percent.

The singular forms "a," "an," and "the" include plural referents unless the context clearly dictates otherwise. Unless defined otherwise, technical and scientific terms used herein have the same meaning as is commonly understood by one skilled in the art.

The endpoints of all ranges directed to the same component or property are inclusive of the endpoint and are independently combinable. Thus, for example, a disclosed range of a weight average molecular weight of 1000 or more, and as high as 1,000,000 or, preferably, as high as 250,000, or, more preferably, as high as 100,000, even more preferably, as high as 10,000, yet even more preferably, as high as 5,000, shall mean a weight average molecular weight of from 1,000 to 1,000,000, or from 5,000 to 1,000,000, or from 10,000 to 1,000,000, or from 250,000 to 1,000,000, or from 100,000 to 250,000, or from 100,000 to 1,000,000 or, preferably, from 1,000 to 250,000, or, preferably, from 5,000 to 250,000, or, preferably, from 10,000 to 250,000, or, more preferably, from 1,000 to 100,000, or, more preferably, from 5,000 to 100,000, or, more preferably, from 10,000 to 100,000, or, even more preferably, from 1,000 to 10,000, or, even more preferably, from 5,000 to 10,000, or, yet even more preferably, from 1,000 to 5,000.

Unless otherwise indicated, all temperature and pressure units are room temperature (∼20- 22 ºC) and standard pressure (STP), also referred to as "ambient conditions"

All phrases comprising parenthesis denote either or both of the included parenthetical matter and its absence. For example, the phrase "(co)polymer" includes, in the alternative, polymer, copolymer and mixtures thereof.

The formaldehyde-free curable aqueous compositions of the present invention comprise biologically sourced carbohydrates and provide significantly improved the wet mechanical performance of a cured mineral wool product or a glass bead dogbone. The curable aqueous composition provide excellent tensile strength performance at surprisingly low levels of from 0.5 to 12 wt.%, for example, from 1 to 5 wt.%, of azetidinium group containing resins. The tensile strength data show that the curable aqueous compositions maintain the same level of wet tensile strength as compositions made without carbohydrate. In addition, the curable aqueous compositions enable use of the azetidinium group containing resins in high solids formulations which provide faster dry times than conventional compositions of the azetidinium group containing resins. Further, the present invention enables improved coupling of the curable aqueous compositions to a glass fiber substrate, as shown by the improved dry tensile performance of the cured aqueous compositions.

The compositions of the present invention provide dried or granular compositions having only water of hydration and provide, as well, stable concentrated compositions having a total solids of from 25 to 70 wt.%, or 30 wt.% to 60 wt.%. Such concentrates that can be diluted with water or one or more aqueous solvent to provide aqueous curable binder compositions. Accordingly, the present invention provides stable aqueous thermosetting binder compositions comprising a total solids of from 0.5 to 70 wt.%, preferably, 20 wt.% to 65 wt.%, or, preferably, 30 wt.% to 60 wt.%, based on the total weight of the curable aqueous composition.

The curable aqueous compositions of the present invention contain (i) one or more polyacid. The polyacid must be sufficiently nonvolatile that it will substantially remain available for reaction with the polyol in the composition during heating and curing operations. The polyacid may be one or more polymeric polyacid, one or more organic polybasic acid, or, preferably, mixtures thereof.

The (i) one or more polyacid may be chosen from, for example, organic polybasic acids, polyesters containing at least two carboxylic acid groups, addition (co)polymers containing at least two, preferably, at least four, copolymerized carboxylic acid, salt or anyhydride functional monomers. Preferably, the one or more polymeric polyacid is chosen from addition (co)polymers formed from at least one ethylenically unsaturated monomer, most preferably polymers and copolymers of (meth)acrylic acid. The addition (co)polymers may be in the form of solutions of the addition (co)polymer in an aqueous medium such as, for example, an alkali-soluble resin which has been solubilized in a basic medium; in the form of aqueous dispersions such as, for example, an emulsion-polymerized dispersion; or in the form of aqueous suspensions.

Organic polybasic acids may be compounds having with a molecular weight less than about 1000 bearing at least two carboxylic acid groups, anhydride groups which hydrolyze to two carboxylic acid groups in aqueous media, or salts thereof, such as, polybasic carboxylic acids and anhydrides, or their salts. Exemplary polybasic acids and anhydrides may include, citric acid, butane tricarboxylic acid, maleic acid, maleic anhydride, fumaric acid, succinic acid, succinic anhydride, sebacic acid, azelaic acid, adipic acid, glutaric acid, tartaric acid, itaconic acid, trimellitic acid, hemimellitic acid, trimesic acid, tricarballylic acid, cyclobutane tetracarboxylic acid, 1,2,3,4-butanetetracarboxylic acid, pyromellitic acid, oligomers of carboxylic acid, and the like, and salts thereof. Preferably, the (i) one or more polyacid comprises citric acid; more preferably, it comprises citric acid mixed with a polymeric polyacid.

Suitable polymeric polyacid (co)polymers are formed from the addition polymerization of one or more ethylenically unsaturated carboxylic acids, anhydrides, which hydrolyze to dicarboxylic acids in aqueous media, and salts thereof and, optionally, one or more comonomers.

Suitable ethylenically unsaturated carboxylic acids or anhydrides may include, for example, methacrylic acid, acrylic acid, crotonic acid, fumaric acid, maleic acid, 2-methyl maleic acid, itaconic acid, citraconic acid, mesaconic acid, cyclohexenedicarboxylic acid, 2-methyl itaconic acid, α-methylene glutaric acid, monoalkyl maleates, and monoalkyl fumarates, and salts thereof; ethylenically unsaturated anhydrides, such as, for example, maleic anhydride, itaconic anhydride, acrylic anhydride, and methacrylic anhydride, and salts thereof. Preferred monomers may include carboxylic acid groups, anhydride groups, or salts are (meth)acrylic acid and maleic acid, and salts thereof, and maleic anhydride. The monomers that include carboxylic acid groups, anhydride groups, or salts are used at a level of from 10 wt.% or more, based on the weight of the polymer, or, 25 wt.% or more, or, preferably 30 wt.% or more, or, more preferably 75 wt.% or more, or, even more preferably 85 wt.% or more, and up to 100 wt.%, for example, from 90 to 99 wt.%.

Suitable ethylenically unsaturated comonomers may include one or more acrylic ester monomers including methyl acrylate, ethyl (meth)acrylate, butyl acrylate, 2-ethylhexyl acrylate, decyl acrylate, methyl methacrylate, butyl methacrylate, isodecyl methacrylate; hydroxyl group containing monomers, such as hydroxyethyl acrylate, hydroxyethyl methacrylate, hydroxypropyl methacrylate and allyloxy functional hydroxyl group-containing monomers; acrylamide or alkyl substituted acrylamides, such as mono-alkyl (meth)acrylamide, di-alkyl (meth)acrylamide or t-butylacrylamide; styrene or substituted styrenes; butadiene; vinyl acetate or other vinyl esters; acrylonitrile or methacrylonitrile; and the like.

Suitable examples of comonomers may include one or more allyloxy functional hydroxyl group-containing monomers; one or more phosphorous-containing comonomers, such as vinyl phosphonic acid, phosphoalkyl (meth)acrylates, or salts thereof; or one or more strong acid functional monomers, such as vinyl sulfonic acid monomers, and their salts; or mixtures of any of such comonomers. Such comonomers may be included in the addition monomer mixture in the amount of 3 or more wt.%, or 10 or more wt.%, and as much as 20 wt.% or less, or 15 wt.% or less, based on the total weight of monomers used to make the addition copolymer.

The one or more preferred allyloxy functional hydroxyl group-containing monomers may be chosen from hydroxyl group-including monomers of Formula I,

CH2=C(R1)CH(R2)OR3 (I)

wherein R1 and R2 are independently selected from hydrogen, methyl, and-CH₂OH; and R3 is selected from hydrogen, -CH₂CH(CH₃)OH, -CH2CH2OH, C(CH₂OH)₂-C₂H₅, and (C₃-C₁₂) polyol residues; or of Formula II, 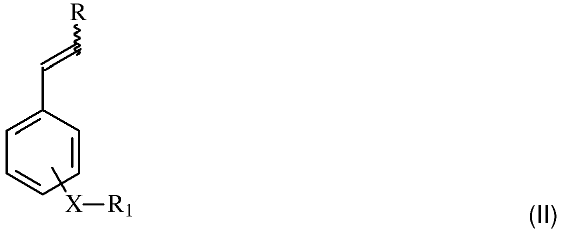 wherein R is selected from CH₃, Cl, Br, and C₆H₅; X is a covalent bond, a divalent methylene or a divalent C₂ to C₆ alkylene or alk(ox)ylene group; and R1 is selected from H, OH, CH₂OH, CH₂CH₂OH, CH(CH₃)OH, glycidyl, CH(OH)CH₂OH, and (C₃-C₁₂) polyol residues, preferably, OH. Such functional hydroxyl-group containing monomers may be allyloxy monomers that are included in the addition monomer mixture at a level of up to 99 wt.%, or up to 70 wt.% , preferably, up to 30 wt.%, based on the total weight of the monomer mixture, and can be used in amounts of 1 wt.% or more, or 10 wt.% or more, based on the total weight of the monomer mixture. Examples of suitable unsaturated monomers of Formula (II) include allyl alcohol, methallyl alcohol, allyloxyethanol, allyloxypropanol, 3-allyloxy-1,2-propanediol, as disclosed in U.S. patent no. 7,766,975, to Clamen et al. The monomers of Formula I and Formula II, above, can be prepared by a variety of synthetic routes known to those skilled the art and disclosed in U.S. patent no. 7,766,975, to Clamen et al. For example, allyl chloride can be reacted with various polyhydroxy compounds, for example, (C₃-C₆)-polyhydroxy compounds such as erythritol, pentaerythritol, glycerine and sugar alcohols to give the corresponding allyloxy derivatives of those polyhydroxy compounds. Vinyl glycols may be prepared by methods such as those described in U.S. 5,336,815. Allyloxy compounds that would hydrolyze to allyloxy compounds of Formula I under the conditions of aqueous polymerization, for example allyl glycidylether, are also useful as monomers to produce polymer additives of the present invention.

The (i) one or more polyacid may suitably have a weight average molecular weight of 1000 or more, and the weight average molecular weight may range from 1000 or more, and as high as 1,000,000 or, preferably, as high as 250,000, or, more preferably, as high as 100,000, even more preferably, as high as 10,000, yet even more preferably, as high as 5,000. Higher molecular weight alkali-soluble resins can lead to curable aqueous compositions which exhibit excessive viscosity. Accordingly, when the addition polymer is an alkali-soluble resin which comprises the reaction product of one or more carboxylic acid, anhydride, or salt thereof, in the amount of from 10 wt.% or more, for example 30 wt.%, based on the total weight of the monomers used to make the addition polymer, a molecular weight from 500 to 20,000 is preferred.

The one or more addition (co)polymers as (i) polymeric polyacids are preferably prepared by aqueous solution polymerization, and may also be prepared by emulsion polymerization techniques which are well known in the art. The polymerization reaction can be initiated by various methods known in the art, such as, preferably, by using the thermal decomposition of one or more initiators, for example, by using an oxidation-reduction reaction ("redox reaction") to generate free radicals to effect the polymerization. Methods, media and reagents for polymerization to make a polymeric polyacid are disclosed in U.S. patent no. 7,766,975, to Clamen et al.

Preferably, the polymeric polyacid (i) is formed by gradual addition solution polymerization in water as disclosed in U.S. patent no. 7,766,975, to Clamen et al.

The addition (co)polymer may be polymerized in the presence of one or more chain transfer agents to prepare (co)polymers of low average molecular weight. Customary regulators may be used, for example, organic compounds containing SH groups, such as 2-mercaptoethanol; hydroxylammonium salts, such as hydroxylammonium sulfate; formic acid; sodium bisulfite; or a phosphorous-containing regulator, such as, for example, a phosphorous-containing accelerator like hypophosphorous acid and its salts, e.g. sodium hypophosphite, as is disclosed in U.S. Patent No. 5,294,686. The chain transfer agents, with the exception of the phosphorous-containing accelerator, are generally used in amounts of from 0 to 15 wt.%, preferably from 1 to 10 wt.%, based on the weight of the monomers in the curable aqueous composition. Phosphorous-containing accelerators are discussed, below.

To improve solubility in aqueous media, the carboxylic acid groups, or salts thereof of the one or more addition (co)polymer may be neutralized with one or more fixed or volatile base. Preferably, the carboxylic acid groups, or salts of the addition (co)polymer may be neutralized with a volatile base. By "volatile base" is meant herein one or more base which is substantially volatile under the conditions of treatment of the substrate with the curable aqueous composition. Suitable volatile bases include, for example, ammonia or volatile lower alkyl amines. By "fixed" base is meant herein, a base which is substantially nonvolatile under the conditions of use and curing of the curable aqueous composition. Fixed multivalent bases such as, for example, calcium hydroxide or calcium carbonate, may tend to destabilize aqueous dispersions if the copolymer component is used in the form of an aqueous dispersion and are preferably not used; however, they can be used in minor amounts.

The amount of one or more base used may be such that the carboxylic acid groups, or salts thereof of the addition (co)polymer are neutralized to an extent of less than 35%, or less than 20%, or less than 5%, calculated on an equivalents basis. It is preferred not to use any neutralizing base.

The (ii) mixture of two or more polyols of the present invention contains one or more polyol in addition to pentaerythritol contains two, three or more than three hydroxyl groups or, preferably, three or more. The polyol must be sufficiently nonvolatile that it will substantially remain available for reaction with the polyacid in the composition during heating and curing operations. The polyol may be chosen from, for example, (poly)ethylene glycol, diethanolamine (DEA), glycollated ureas, 1,4-cyclohexane diol, resorcinol, catechol, and C₃ to C₈ (poly)alkylene glycols; one or more trihydric polyols which contain three or more hydroxyl groups, such as glycerol, trimethanol propane (TMP), trimethanolethane, triethanolamine (TEA), 1,2,4-butanetriol, poly(vinyl alcohol), partially hydrolyzed poly(vinylacetate), propoxylated trimethylol propane, propoxylated pentaerythritol, β-hydroxyamides of the following Formula (III): 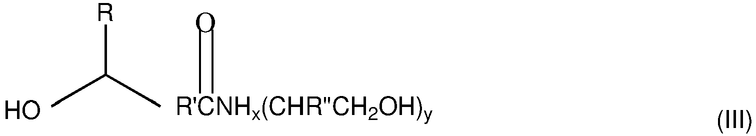 in which formula, R and R" independently represent H, or monovalent C₁ to C₁₈ linear or branched alkyl radicals which may contain aryl, cycloalkyl and alkenyl groups; R' represents a divalent C₁ to C₅ alkylene radical or a covalent bond; y is the integer 1 or 2,; x is 0 or 1, such that (x + y) =2; and mixtures thereof. Other suitable trihydric polyols having at least three hydroxyl groups may comprise reactive polyols such as, for example, β-hydroxyalkylamides such as, for example, bis-(N,N-di(β-hydroxyethyl))adipamide, as may be prepared according to the teachings of U.S. Pat. No. 4,076,917; and addition (co)polymers comprising the polymerization product of hydroxyl group containing monomers; or mixtures and combinations thereof.

Further, suitable polyols other than pentaerythritol may comprise the (i) one or more polymeric polyacids of the present invention comprising the polymerization product of one or more ethylenically unsaturated carboxylic acids and one or more hydroxyl group containing monomers, such as the monomers of formula (I) or (II), above.

Preferably, the one or more polyol other than pentaerythritol comprises a trihydric alcohol, diethanolamine, or a dihydric polyol of formula (III). Preferred trihydric alcohols are glycerol, TEA, trihydric β-hydroxyamides of formula (III), and mixtures thereof.

In the polyacid compositions of the present invention, the ratio of the number of equivalents of carboxy, or salts thereof in the curable aqueous compositions, i.e. the one or more polyacid (i), to the total number of equivalents of hydroxyl in the polyol (ii) plus the pentaerythritol, not counting the hydroxyl groups in the one or more carbohydrate, is from about 1/0.1 to about 1/10, preferably 1/0.2 to 1/1, and may, for example, range as high as 1/3. To avoid an excess of volatile organic compounds (VOC's) and insure formation of a good cure network, an excess of equivalents of carboxy, anhydride, or salts thereof to the equivalents of hydroxyl in the polyol (ii) plus the pentaerythritol in the curable aqueous compositions is preferred. As used herein, the total number of hydroxyl equivalents in the (ii) mixture of two or more polyols does not include any hydroxyl group from carbohydrates.

The aqueous binder composition may comprise (iv) one or more carbohydrate, such as a monosaccharide, disaccharide, sugar alcohol or polysaccharide. The term "carbohydrate" refers to polyhydroxylated compounds of the formula (CH₂O)ₙ many of which contain aldehydic or ketonic groups or yield such groups on hydrolysis. The carbohydrate should be sufficiently nonvolatile to maximize its ability to remain in the binder composition during the heating or curing thereof.

Suitable carbohydrates include sugars, such as monosaccharides or disaccharides, preferably reducing sugars. Suitable monosaccharides may consist of a triose, a tetrose, a pentose, a hexose, or a heptose, preferably, with five or six carbon atoms referred to as pentoses and hexoses. Sugars may contain an aldehyde, referred to as an aldose; or a ketone, referred to as a ketose. Suitable aldopentose sugars include ribose, arabinose, xylose, and lyxose; and ketopentose sugars include ribulose, arabulose, xylulose, and lyxulose. Examples of aldohexose sugars include glucose (for example, dextrose), mannose, galactose, allose, altrose, talose, gulose, and idose; and ketohexose sugars include fructose, psicose, sorbose, and tagatose. Ketoheptose sugars include sedoheptulose. Other natural or synthetic stereoisomers or optical isomers of such carbohydrates may also be useful as the carbohydrate component of the aqueous binder composition.

Suitable reducing sugars may include, for example, fructose, glyceraldehydes, lactose, arabinose, maltose, glucose, dextrose, xylose and levulose. Further, a number of suitable reducing sugar sources may be used, such as corn syrup, high fructose corn syrup, hemicellulosics from corn cob, de-lignified wood and bamboo, and other fructose, xylose,and dextrose equivalents. One suitable commercially available corn syrup is, for example ADM 97/71 corn syrup with 97%, or greater, dextrose content (Archer Daniels Midland Company Decatur, IL). Preferred reducing sugars are 5-carbon and 6-carbon reducing sugars.

Suitable sugar alcohols may be, for example, xylitol, sorbitol and mannitol Suitable disaccharides may include sucrose, lactose, or maltose.

Suitable polysaccharides (including tri- or higher-saccharides) may be, for example, starch, cellulose, gums such as guar and xanthan, alginates, chitosan, pectin, gellans and etherified, esterified, acid hydrolyzed, dextrinized, oxidized or enzyme treated derivatives thereof. Such polysaccharides can be derived from natural products, including plant, animal and microbial sources.

Suitable starches include maize or corn, waxy maize, high amylose maize, potato, tapioca and wheat starches. Other starches include varieties of rice, waxy rice, pea, sago, oat, barley, rye, amaranth, sweet potato, and hybrid starches available from conventional plant breeding, e.g., hybrid high amylose starches having amylose content of 40% or more, such as high amylose corn starch. Genetically engineered starches, such as high amylose potato and potato amylopectin starches, may also be useful.

The polysaccharides may be modified or derivatized, such as by etherification, esterification, acid hydrolysis, dextrinization, oxidation or enzyme treatment (e.g., with alpha-amylase, beta-amylase, pullulanase, isoamylase, or glucoamylase), or bio-engineered.

The carbohydrate of the aqueous composition optionally may be substituted, for example with hydroxy, halo, alkyl, alkoxy, or other substituent groups. The carbohydrate may be in the form of powdered or granulated sugars or sugar syrups, including corn syrup, wheat syrup or high fructose corn syrup.

Preferably, if the carbohydrate is a sugar syrup, it has a DE of from 50 to 100.

Preferably, if the carbohydrate is a polysaccharide, it is chosen from starch, maltodextrin and a polysaccharide having a DE of from 0 to 35, or, more preferably, from 0 to 30.

Preferably, the curable aqueous composition also contain (v) one or more phosphorous-containing accelerator which may be a compound such as those disclosed in U.S. Patent No. 6,136,916. Preferably, the accelerator is selected from the group consisting of sodium hypophosphite, sodium phosphite, or a mixture thereof. The phosphorous-containing accelerator can also be one or more (co)oligomer bearing phosphorous-containing groups added to the curable aqueous compositions, for example, a (co) oligomer of acrylic acid formed in the presence of sodium hypophosphite by addition polymerization. Further, the one or more phosphorous-containing accelerator may comprise part of a polymeric polyacid as a chain transfer agent, the polymeric polyacid bearing phosphorous-containing groups such as, for example, addition (co)polymers of acrylic acids and, optionally, ethylenically unsaturated comonomers, formed in the presence of sodium hypophosphite.

The (v) one or more phosphorous-containing accelerator may be used at a level of from 0.1 wt.% to 40 wt.% , based on the total solids weight of the curable aqueous compositions, or 1 wt.% or more or, preferably, 2 wt.% or more, or up to 20 wt.%, or, preferably, up to 15 wt.%, and, more preferably, up to 12 wt.%. When the phosphorous-containing accelerator comprises part of a polymeric polyacid, the wt.% of the phosphorous-containing accelerator is determined by the solids wt.% of the phosphorous-containing accelerator charged to the reactor as a fraction of the total batch solids.

The curable aqueous compositions of the present invention may comprise one or more strong acid catalyst and has a low pH of, preferably, ≤ 3.5, more preferably 2.5 or less, and even more preferably 2.1 to 2.3. The low pH may be obtained, for example, by adding one or more suitable acids, preferably a mineral acid to the curable aqueous composition. The mineral acid may be added either the point of application or manufacturing of the binder. The mineral acid, may be sulfuric or nitric acid. Other suitable acids may be organic acids, such as, for example carboxylic and sulfonic acids, as in p-toluene sulfonic acid.

If the curable aqueous composition comprises strong acid esterifying catalysts (with a pKa of ≤ 3.0), the carboxylic acid groups, or salts of the addition (co)polymer may be neutralized, preferably with a fugitive base, such as a volatile base. In regard to equivalents basis, when the half ester of a dicarboxylic acid, or the anhydride of a dicarboxylic acid is used, the equivalents of acid are calculated to be equal to those of the corresponding dicarboxylic acid.

The curable aqueous composition may be prepared by admixing the one or more polyacid, the one or more polyol, the pentaerythritol, and, if desired, the one or more phosphorous-containing accelerator and any additional ingredients using conventional mixing techniques. Optionally, one or more organic polybasic acid or salt thereof may be mixed with one or more polyol (ii), under reactive conditions, prior to mixing with (i) one or more polyacid. Water may be admixed with the remainder of the composition at the point of use, and not before, to minimize shipping weight.

The total solids of the curable aqueous compositions of the present invention may from 0.5 to 99 wt.%. The total solids of the compositions may range 90 wt% or above, or 95% or above , based on the total weight of the composition, as in with a dried (e.g. spray dried) or granular binder composition that only contains water of hydration. Liquid compositions may have total solids contents of up to 70 wt.%, as is the case with solutions or dispersions, or up to 65 wt.%, or up to 60 wt.% ; such total solids may range as low as 0.5 wt.% or more, or 20 wt.% or more, or 30 wt.% or more. The total solids of the curable aqueous compositions may be selected to provide compositions having a suitable viscosity for various means of treating substrates. For example, sprayable curable aqueous compositions may have a total solids of 10 wt.% or less. However, substrates may be dipped in or themselves contacted with curable aqueous compositions having a total solids of 10 wt.% or more.

The compositions of the present invention may further comprise additives, which can be added at any time. Suitable additives include one or more of each of an emulsifier; a pigment; a filler or extender, used in the amount of up to 40 wt.%, based on the total weight of binder solids; an anti-migration aid; a curing agent, e.g. urethanes, and epoxy resins, such as bisphenol epoxy resins; a coalescent; an anionic or a nonionic surfactant, including anionic phosphonates, maleates, sulfinates, and dodecyl benzene sulfonic acid (DDBSA), preferably nonionic surfactants having an HLB of 5-25 and non-aromatic sulfonates, used in the amount of 0.01 to 5 wt.%, based on the total weight of binder solids; a spreading agent; a dust suppressing agent; a biocide; a plasticizer; a coupling agent such as a silane, an anti-foaming agent; a corrosion inhibitor, particularly corrosion inhibitors and anti-oxidants effective at pH≤4 such as thioureas, oxalates, and chromates, e.g. tin oxalate; a colorant; an antistatic agent; a lubricant; a dust suppressing agent or a wax.

Suitable fillers or extenders may comprise microcrystalline silicas, including kaolin and bentonite; calcined aluminum silicate, wollastonite; diatomaceous silica; ground glass; nepheline syenite; hydrotalcite; mica; smectites, such as phyllosilicates', titanium dioxide, zinc oxide, calcined clay and calcined silicates, such as calcined aluminum silicates and mixtures thereof. Kaolin clay, smectites or phyllosilicates may or may not be surface treated to render them hydrophobic, such as with trialkylarylammonium compounds.

To facilitate spray application of the curable aqueous compositions on heat-resistant non-woven fibers, e.g. glass wool or mineral wool, the compositions may additionally comprise one or more anti-foaming agent. Suitable anti-foaming agents may include ethoxylated nonionics and hydrophobe-hydrophile-hydrophobe block copolymers, such as associative thickeners, each on the amount of from 0.001 to 5 wt.%, based on the total weight of binder solids, or the β-hydroxyamides from lactones of formula (III) in the amount of up to 10 wt.% or more, based on the total weight of binder solids, or up to 5 wt.%, or up to 1 wt.% , or in the amount of 0.1 wt.% or more, or 0.5 wt.% or more.

Preferably, curable aqueous compositions for treating glass or mineral wool substrates comprise coupling agents, such as silanes, particularly hydrolyzable oxysilanes like 3-glycidoxypropyltrialkoxysilane, aminopropyltri(m)ethoxy silane, for example, the γ-glycidoxypropyltrimethoxysilane compounds available as SILQUEST™ A-187 (Momentive Performance Materials, Waterford, NY). Such coupling agents may be used in the amount of 0.1 wt.% or more, based on the total weight of binder solids, or 0.2 wt.% or more, or 0.5 wt.% or more, and such amounts may range up to 5 wt.%, or up to 2 wt.%, or up to 1.5 wt.% based on binder solids.

Preferably, to promote surface coverage, one or more surfactants or emulsifiers are added to the curable aqueous compositions immediately after the binder solids are admixed together. The one or more surfactants or emulsifiers help to maintain aqueous homogeneity at higher total solids (>30 %) and storage temperatures equal to or higher than room temperature. Suitable surfactants may include nonionics, sulfonates, sulfates, phosphonates phosphates, maleates. Particularly useful are non-silicone and acetylenic group containing surfactants such as SURFYNOL™ (Air Products and Chemicals, Inc., Allentown, PA)and TERGITOL™ (The Dow Chemical Company, Midland, MI), as well as ethoxylated fatty alcohols, such as NEODOL™ (Shell Chemicals, Houston TX).

For use on substrates containing fines or finely divided materials, one or more dust suppressing agents may desirably be added. Such dust suppressing agents may include hydrocarbons having carbon numbers predominantly higher than C₂₅ and boiling above approximately 400°C (752°F). These can include non smoking hydrocarbon emulsions such as: MULREX™ non combustible oils (Exxonmobil Oil Corp., Fairfax, Va) and Garo 217 (G.O.V.I., NV, Drongen, Belguim). Such dust suppressing agents can be added as an emulsified aqueous dispersion or directly without emulsification in the amount of from 1 to 5 wt.%, preferably up to 3.0 wt.%, based on total binder solids.

The present invention provides methods for treating one or more substrates by forming the curable aqueous compositions of the present invention, contacting the substrate with the curable aqueous composition or applying the curable aqueous composition to the substrate, and heating the curable aqueous composition at a temperature of from 100°C to 400°C to dry and cure the composition. The substrate may be contacted with the curable aqueous composition by methods commonly described as, for example, coating, e.g. dip coating, sizing, saturating, bonding, and combinations thereof.

The curable aqueous compositions can be applied to a substrate by conventional techniques such as, for example, air or airless spraying, padding, saturating, roll coating, curtain coating, beater deposition, or coagulation. Curable aqueous compositions comprising polyacid addition (co)polymers having a weight average molecular weight above 20,000 and having a high viscosity, e.g. ≥600 centipoise at RT and standard pressure, may preferably be applied to fibrous and composite substrates by dip or roll coating.

In drying and curing the curable aqueous compositions, the duration, and temperature of heating, will affect the rate of drying, ease of processing or handling, and property development of the treated substrate. Suitable heat treatment at 100°C or more, and up to 400°C may be maintained for from 3 seconds to 15 minutes. Preferably, heat treatment temperatures range 150°C or higher; such preferred heat treatment temperatures may range up to 280°C, or, more preferably, up to 225°C.

Drying and curing can be effected in two or more distinct steps, if desired. For example, the curable aqueous composition can be first heated at temperatures and for times sufficient to substantially dry, but not to substantially cure the composition, followed by heating for a second time, at higher temperatures and/or for longer periods of time, to effect curing. Such procedures, referred to as "B-staging", can be used to provide binder-treated nonwovens, for example, in roll form, which can be cured later, with or without forming or molding into a particular configuration, concurrent with the curing process.

As polyacids (i) can be corrosive to certain types of processing equipment, particularly those made from soft steel, certain types of corrosion control may preferably be practiced when handling solutions containing such polyacids. These practices can include, for example, pH control, e.g. by using TEA or basic polyols (ii), reducing use of or eliminating strong acids, reducing use of phosphorous-containing accelerators and polymers containing them, and using materials such as stainless steel in the process equipment itself instead of more corrosive material.

Suitable substrates may include fibers and fibrous articles, such as, for example, fibers such as glass and mineral fibers; nonwovens; heat-resistant woven and nonwoven fabrics, such as those comprising aramid fibers, ceramic fibers, metal fibers, carbon fibers, polyimide fibers, polyester fibers, rayon fibers, mineral fibers and glass fibers; finely divided or fibrous metal and heat-resistant plastic materials, e.g. poly(aromatic imides) or PVC. Suitable nonwoven substrates may comprise fibers that have been consolidated by purely mechanical means such as, for example, by entanglement caused by needle-punching, by an air-laid process, or by a wet-laid process; by chemical means, such as, for example, treatment with a polymeric binder; or by a combination of mechanical and chemical means before, during, or after nonwoven fabric formation. Heat-resistant nonwovens may also contain fibers which are not in themselves heat-resistant such as, for example, polyester fibers, rayon fibers, nylon fibers, and superabsorbent fibers, in so far as or in amounts such that they do not materially adversely affect the performance of the substrate.

Suitable applications for the curable aqueous compositions of the present invention include, for example, nonwovens for use as insulation batts or rolls to be used in ovens and in building construction, as reinforcing mats for roofing or flooring applications, as roving, as microglass-based substrates for printed circuit boards, as battery separators, as filter stock, e.g. for air duct filters, as tape stock, as reinforcement scrim in cementitious and non-cementitious coatings for masonry, or as abrasives; wovens, nonwovens and composites for use as abrasives and stock or prepregs therefore, e.g. brake shoes and pads, clutch plates, or as sheets or panels, as in ceiling tiles; and mineral or glass fiber-containing heat-resistant nonwoven fabrics impregnated with hot asphaltic compositions, for example, at temperatures of from 150°C to 250°C to make roofing shingles or roll roofing materials.

EXAMPLES: The following non-limiting examples illustrate the curable aqueous composition and the use thereof as a binder for heat-resistant nonwovens.

Abbreviations used below include the following:
pAA = polyacrylic acid; SHP = sodium hypophosphite; and, TEA = Triethanolamine.

Test Methods: The following tests were conducted on the indicated curable aqueous compositions:
Tensile Testing of treated glass microfiber filter paper: A binder impregnated microfiber filter (Whatman International Inc., Maidstone, England, GF/A, catalog No. 1820 866) as a 20.3 cm x 25.4 cm sheet was prepared by drawing the sheet through a trough filled with the indicated pre-mixed curable aqueous composition, and running the treated sheet between two calendar rolls (Mathis lab foulard) at a speed of 3m per min and 3 bar pressure to homogenize the sheets and absorb excess binder. The resulting sheets were dried at 200 ºC for 2.5 min in a Mathis Oven that is vented with fan set at 2300 rpm. Post drying weight was determined to calculate binder add-on (dry binder weight as a percentage of filter paper weight.) All sheets had about 20 % of binder add-on, about 53 g solids/m² of sheet. "Add on" is the wt.% based on filter sheet weight of binder solids retained on the filter sheet after initial drying and before curing. The dried sheets were then cured at 200ºC for 150 seconds in the same type of Mathis oven used to dry the samples. For each indicated curable aqueous composition, a total of three to eight trials was run and the average tensile strength was reported.
Dry Tensile: The dried and cured sheets were cut in 168 x 30 mm strips and each sheet was tested at 23 °C and 50% RH using a Zwick tester (Zwicki™ 1140, Zwick GmbH& Co. KG, Ulm, DE) at a speed of 100 mm/min.
Wet Tensile: The dried and cured sheets were cut in 168 x 30 mm strips and each sheet was tested by soaking in a water bath for 10 minutes and then testing using a Zwick tester (Zwicki™ 1140) at a speed of 100 mm/min.
Dogbone Tensile Testing: A dogbone (75mm (I) x 42mm (w) and 25mm (25) x 6 mm thickness) was made by mixing glass beads (Spheriglass ™ 2024 CP00, 106 to 212 µm, Specification 31102, Potters Industries, Kirchenheombolanden, DE), into a beaker, mixing it by hand using a spatula with the indicated curable aqueous composition at a 5 wt.% binder add-on) until a homogeneous slurry results, filling a polytetrafluoroethylene coated stainless steel form mold having the above dimensions with the mixture, and compressing the slurry so that a dense and uniform shell bone can be fabricated. The dog bones are then cured at 200 °C for 30 min in a Mathis oven. For dry tensile, the dogbones were conditioned at 23 °C / 50% RH for > 12 h and then tested. For wet tensile, unless otherwise indicated, the dogbones were conditioned by placing them over water bath in a Mathis oven at 90°C for 90 min, removed from the oven, allowed to cool for 30 minutes and then tested. The cured and conditioned dogbones were then tested for dry and wet tensile strength using a Zwick Z005 tensile tester Zwick GmbH & Co. Kg, Ulm, DE) by placing the dogbone into the jaws of the tester and bending the dogbone with the jaws at a displacement rate of 5 mm/min. The test recorded the maximum tensile force at break. For each indicated curable aqueous composition, a total of three to six trials was run and the average tensile strength was reported.

As shown in Tables 1 and 1A, below, the following materials were used in the Examples:

**Table 1: Materials**

| | |
|---|---|
| Binder 1 | See Table 1A |
| Binder 2 | See Table 1A |
| Binder 3 | (96.6 wt.% Binder 2 + 3.4 wt.% azetidinium group containing resin (w/w solids) |
| Azetidinium group containing polyamidoamine resin | kymene™ LX 145 resin (low AOX¹ levels, 14 wt.% aqueous solution,) Solenis Int'l, L.P., Wilmington, DE) |
| water-insoluble, native starch granules | Meritena™ 120, Tereos (DE ∼ 0; humidity 12wt.%, Syral Belgium NV, Aalst, BE) |
| maltodextrin | Maltodextrin DE 18 (Sigma Aldrich, St. Louis, MO) |
| wheat syrup (DE 40) | Glucowheat 40/79, DE 40 (Blattmann AG, Wädenswil, CH) |
| wheat syrup (DE 60) | Glucowheat 60/79, DE 60 (Blattmann AG) |
| crystalline D-glucose monohydrate | C* Dex 02001 (Cargill, Decatur, IL) |
| ammonium sulfate | (Sigma Aldrich) |
| citric acid | (Sigma Aldrich) |

| | |
|---|---|
| 1. AOX = adsorbable organic halogens. | |

Curable aqueous compositions, as indicated in Table 2, below, were prepared by heating the polymeric polyacid in the indicated binder to 65°C for 15 minutes in a water bath, slowly adding the pentaerythritol to the polyacid, followed by 30 to 35 minutes of agitation, addition of any SHP and glycerol or polyol and 15 minutes more of agitation to make a binder, followed by simple mixing of the starch, the indicated binder, the citric acid and the azetidinium group containing

**Table 1A: Compositions of Polymeric Polyacids**

| **Materials** | **Binder 1** | **Binder 2** |
|---|---|---|
| pAA SHP (Mw = 1800) | 55.3 | 65.7 |
| TEA | 26.7 | |
| SHP (83 wt.% solids in water) | 7.7 | 13.6 |
| Sodium Persulfate | 0.6 | 0.7 |
| Sulfuric acid | 9.7 | |
| Glycerol (86.5 wt.% solids in water) | | 9.9 |
| Pentaerythritol (mono) | | 10.1 |
| Total solids parts¹ | 100 | 100 |
| SHP as post add, % | | 6.6 |
| TEA on pAA% | 48.3 | |
| TEA on pAA, % | 48.3 | n/a |
| Glycerol on pAA, % | n/a | 15.1 |
| Solids in water | 54 wt.% | 55 wt.% |

| | | |
|---|---|---|
| 1. All parts of materials are reported solely on a solids basis resins. The results of dogbone tensile tests of these compositions is reported in Table 3, below, as an average of three trials of each test. | | |

**Table 2: Curable Aqueous Compositions¹ with Polymeric Polyacids**

| **Example** | **3*** | **4*** | **5*** | **6** |
|---|---|---|---|---|
| **Material Solids** | | | | |
| Binder 1 | 30 | | | |
| Binder 2 | | 30 | 96 | 28.7 |
| water -insoluble, native starch granules | 50 | 50 | | 48.7 |
| citric acid | 20 | 20 | | 18.6 |
| Azetidinium group containing polyamidoamine | | | 4 | 4 |
| **Total parts** | 100 | 100 | 100 | 100 |

| | | | | |
|---|---|---|---|---|
| *- Indicates Comparative Example on solids basis; 1. Solids content is 25 wt.%. | | | | |

As shown in Table 3, below, the inventive compositions of Example 6 provides wet tensile strength at least comparable to the same thermosetting aqueous curable binders without any starch as in comparative Example 5. The inventive composition in Example6 with pentaerythritol also gave excellent wet tensile strength in comparison to compositions made with TEA in comparative Example 3.

**Table 3: Dogbone Tensile Results**

| **Example** | **3*** | **4** | **5*** | **6** |
|---|---|---|---|---|
| | F(max) (N) | | | |
| **Tensile dry, RT Average** | 152 | 294 | 526 | 524 |
| **Tensile hot wet Average** | 116 | 188 | 118 | 309 |
| **Wet / dry strength, %** | 76 | 64 | 23 | 59 |

High carbohydrate curable aqueous compositions shown in Table 4, below, were formulated by simple mixing with a turbine mixer in a beaker, stirring the D-glucose into water; then adding ammonium sulfate and agitating 10 min; then adding the azetidinium group containing resin and agitating 10 more minutes. Test results are shown in Table 5, below, as an average of three trials of each test.

As shown in Table 5, below, the inventive curable aqueous compositions gave dramatically improved wet and dry strength in Example 8 even despite the use of only 2 wt.% (solids basis) of azetidinium group containing resins.

**Table 4: High Carbohydrate Curable Aqueous Compositions¹**

| **Example** | **7*** | **8** |
|---|---|---|
| **Material** (Solids basis only) | | |
| crystalline D-glucose monohydrate | 80 | 79 |
| ammonium sulfate | 20 | 19 |
| Azetidinium group containing polyamidoamine resin | | 2 |
| **Total parts** | 100 | 100 |

| | | |
|---|---|---|
| *- Indicates Comparative Example; 1. All compositions at 25 wt.% solids. | | |

**Table 5: Dogbone Tensile Results**

| **Example** | **7*** | **8** | **8 (repeat)** | **8 (repeat)** |
|---|---|---|---|---|
| | F(max), N | | | |
| **Tensile dry, RT Average** | 138 | 370 | 397 | 394 |
| **Tensile hot wet Average** ( | 133 | 255 | 257 | 264 |
| **Wet/dry strength, %** | 97 | 69 | 65 | 67 |

| | | | | |
|---|---|---|---|---|
| *- Indicates Comparative Example | | | | |

Formulations of curable aqueous compositions were made with the materials indicated in Table 6, below, in the same manner as the compositions in Table 2, above. The curable aqueous compositions were tested and the results were presented in Table 7, below as the average of six trials.

**Table 6: Effect of Amount of Azetidinium Group Containing Resins¹, ²**

| **Example** | **9*** | **10** | **11** | **12** | **13** | **14*** |
|---|---|---|---|---|---|---|
| **Material** (Solids basis only) | | | | | | |
| Binder 2 | 30 | 29 | 26 | 21 | 15 | 0 |
| water -insoluble, native starch granules | 50 | 50 | 50 | 50 | 50 | 50 |
| citric acid | 20 | 20 | 20 | 20 | 20 | 20 |
| Azetidinium group containing polyamidoamine | | 1 | 4 | 9 | 15 | 30 |
| **Total parts** | 100 | 100 | 100 | 100 | 100 | 100 |

| | | | | | | |
|---|---|---|---|---|---|---|
| *- Indicates Comparative Example; 1. Binders contain 25 wt.% solids; 2. Epoxy silane was added to all formulations (Dow Corning, Midland, MI). | | | | | | |

**Table 7: Dogbone Tensile Results**

| **Example** | **9*** | **10** | **11** | **12** | **13** | **14*** |
|---|---|---|---|---|---|---|
| | F(max) (N) | | | | | |
| **Tensile dry, RT Average** | 465 | 504 | 434 | 467 | 387 | 182 |
| **Tensile hot wet Average** | 147 | 202 | 291 | 285 | 310 | 90 |
| **Wet/ dry strength, %** | 32 | 40 | 67 | 61 | 80 | 49 |

As shown in Table 7, above, the inventive curable aqueous compositions in Examples 10, 11, 12 and 13 give much better wet tensile strength than do comparative Examples 9 and 14, respectively, with no azetidinium group containing resins or with only azetidinium group containing resins. In addition, Example 13 shows only a marginal increase in wet tensile strength and a decrease in dry tensile strength when 15 parts (solids) of the azetidinium group containing resins is used, as opposed to 1, 4 and 9 parts, respectively, in Examples 10, 11 and 12.

In Table 8, below, various formulations were made as in the manner of the formulations in Table 2, above, and were tested. All curable aqueous composition in Table 8 had a pH of around 2.15. The results of the tests are shown in Table 9, below.

**Table 8: Effect of Various Carbohydrates on Strength**

| **Example** | **15*** | **16*** | **17*** | **18*** | **19*** | **20** | **21** | **22** | **23** | **24** |
|---|---|---|---|---|---|---|---|---|---|---|
| **Material** (Solids basis only) | | | | | | | | | | |
| Binder 2 | 30 | 30 | 30 | 30 | 30 | | | | | |
| Binder 3 | | | | | | 30 | 30 | 30 | 30 | 30 |
| water-insoluble, native starch granules | 50 | | | | | 50 | | | | |
| maltodextrin | | 50 | | | | | 50 | | | |
| wheat syrup, DE 40 | | | 50 | | | | | 50 | | |
| wheat syrup, DE 60 | | | | 50 | | | | | 50 | |
| crystalline D-glucose monohydrate | | | | | 50 | | | | | 50 |
| Citric acid | 20 | 20 | 20 | 20 | 20 | 20 | 20 | 20 | 20 | 20 |
| **Total parts** | 100 | 100 | 100 | 100 | 100 | 100 | 100 | 100 | 100 | 100 |
| **Total solids** (wt.% in water) | 20 | 20 | 20 | 20 | 20 | 20 | 20 | 20 | 20 | 20 |

| | | | | | | | | | | |
|---|---|---|---|---|---|---|---|---|---|---|
| *- Indicates Comparative Example; 1. Binder 3 contains 3.4 wt.% solids of azetidinium group containing resins, based on Binder 3 solids; 2. Epoxy silane was added to all formulations (Dow Corning, Midland, MI). | | | | | | | | | | |

**Table 9: Filter Paper Tensile Results**

| **Example** | **15*** | **20** | **16*** | **21** | **17*** | **22** | **18*** | **23** | **19*** | **24** |
|---|---|---|---|---|---|---|---|---|---|---|
| **Carbohydrate** | starch | | maltodextrin | | wheat syrup (DE 40) | | wheat syrup (DE 60) | | D-glucose | |
| | F(max) (N) | | | | | | | | | |
| **Tensile dry, RT Average** | 4.19 | 6.30 | 4.23 | 6.09 | 4.77 | 4.83 | 4.67 | 6.34 | 5.09 | 5.77 |
| **Tensile hot wet Average** | 3.84 | 4.87 | 4.06 | 4.81 | 4.91 | 4.27 | 3.38 | 4.53 | 3.60 | 4.34 |
| **Wet/ dry strength, %** | 91.61 | 77.29 | 95.98 | 78.92 | 80.07 | 88.46 | 72.24 | 71.41 | 70.65 | 75.21 |

| | | | | | | | | | | |
|---|---|---|---|---|---|---|---|---|---|---|
| *- Indicates Comparative Example | | | | | | | | | | |

As shown in Table 9, above, the inventive curable aqueous compositions in Examples 20, 21, 23 and 24 all have only 1 wt.% of azetidinium group containing resins (30 solids parts of Binder 3) and yet provide dramatic improvements in wet tensile strength.

## Claims

1. A curable aqueous composition comprising (i) one or more polyacid comprising at least two carboxylic acid groups, or salts thereof; (ii) a mixture of two or more polyols including pentaerythritol and one or more additional polyol having at least two hydroxyl groups; (iii) from 0.5 to 12 wt.%, based on the total solids weight of the curable aqueous compositions, of one or more azetidinium group containing resins; and (iv) from 25 to 70 wt.%, based on the total solids weight of the curable aqueous compositions, of one or more carbohydrate, wherein the ratio of the number of equivalents of the carboxylic acid groups or salts thereof in the (i) one or more polyacid, to the total number of equivalents of the hydroxyl groups in the (ii) mixture of two or more polyols is from 1/0.01 to 1/10.

2. The curable aqueous composition as claimed in claim 1, wherein the composition further comprises (v) one or more phosphorous-containing accelerator.

3. The curable aqueous composition as claimed in claim 1, wherein the (i) one or more polyacids comprises a combination of at least one polymeric polyacid and an organic polybasic acid.

4. The curable aqueous composition as claimed in claim 1, wherein the (i) one or more polyacids is a polymeric polyacid chosen from polyacrylic acid (pAA), and pAA aqueous solution copolymers.

5. The curable aqueous composition as claimed in claim 1, comprising (iii) from 1 to 5 wt.%, based on the total solids weight of the curable aqueous composition, of one or more azetidinium group containing resins.

6. The curable aqueous composition as claimed in claim 1, wherein the one or more additional polyols in the (ii) mixture of polyols comprises a dihydric polyol or a trihydric polyol.

7. The curable aqueous composition as claimed in claim 1, wherein the (iii) azetidinium group containing resins are chosen from the aminoamides of epihalohydrin.

8. The curable aqueous composition as claimed in claim 1, wherein the (iv) one or more carbohydrate is chosen from a reducing sugar, a starch or a maltodextrin.

9. The curable aqueous composition as claimed in Claim 1, wherein the ratio of the number of equivalents of the carboxylic acid groups or salts thereof in the (i) one or more polyacid, to the total number of equivalents of the hydroxyl groups in the (ii) mixture of two or more polyols is from 1/0.2 to 1/1.

10. A method for treating, coating or impregnating fibers and fibrous article substrates comprising forming a curable aqueous composition comprising admixing with water or one or more aqueous solvent (i) one or more polyacid comprising at least two carboxylic acid groups, or salts thereof; (ii) a mixture of two or more polyols including pentaerythritol and one or more additional polyol having at least two hydroxyl groups; (iii) from 0.5 to 12 wt.%, based on the total solids weight of the curable aqueous compositions, of one or more azetidinium group containing resins, and (iv) from 30 to 70 wt.% , based on the total solids weight of the curable aqueous compositions, of one or more carbohydrate, wherein the ratio of the number of equivalents of the carboxylic acid groups, or salts thereof in the (i) one or more polyacid to the total number of equivalents of said hydroxyl groups in the (ii) mixture of two or more polyols is from 1/0.01 to 1/10;
contacting the substrate with the curable aqueous composition or, alternatively, applying the curable aqueous composition to the substrate; and
heating the curable aqueous composition at a temperature of from 100°C to 400°C.

## Patentansprüche

1. Eine härtbare wässrige Zusammensetzung, die Folgendes beinhaltet: (i) eine oder mehrere Polysäuren, die mindestens zwei Carbonsäuregruppen oder Salze davon beinhalten; (ii) eine Mischung von zwei oder mehr Polyolen, die Pentaerythritol umfassen, und einem oder mehreren zusätzlichen Polyolen, die mindestens zwei Hydroxylgruppen aufweisen; (iii) zu 0,5 bis 12 Gew.-%, bezogen auf das Gesamtfeststoffgewicht der härtbaren wässrigen Zusammensetzungen, eine oder mehrere azetidiniumgruppenhaltige Harze; und (iv) zu 25 bis 70 Gew.-%, bezogen auf das Gesamtfeststoffgewicht der härtbaren wässrigen Zusammensetzungen, ein oder mehrere Kohlenhydrate, wobei das Verhältnis der Anzahl der Äquivalente der Carbonsäuregruppen oder Salze davon in der (i) einen oder den mehreren Polysäuren zu der Gesamtzahl der Äquivalente der Hydroxylgruppen in der (ii) Mischung von zwei oder mehr Polyolen 1 : 0,01 bis 1 : 10 beträgt.

2. Härtbare wässrige Zusammensetzung gemäß Anspruch 1, wobei die Zusammensetzung ferner (v) einen oder mehrere phosphorhaltige Beschleuniger beinhaltet.

3. Härtbare wässrige Zusammensetzung gemäß Anspruch 1, wobei die (i) eine oder mehreren Polysäuren eine Kombination von mindestens einer polymeren Polysäure und einer organischen mehrbasigen Säure beinhalten.

4. Härtbare wässrige Zusammensetzung gemäß Anspruch 1, wobei die (i) eine oder mehreren Polysäuren eine polymere Polysäure, ausgewählt aus Polyacrylsäure (pAA) und wässrigen pAA-Copolymerisatlösungen, ist.

5. Härtbare wässrige Zusammensetzung gemäß Anspruch 1, die (iii) zu 1 bis 5 Gew.-%, bezogen auf das Gesamtfeststoffgewicht der härtbaren wässrigen Zusammensetzung, ein oder mehrere azetidiniumgruppenhaltige Harze beinhaltet.

6. Härtbare wässrige Zusammensetzung gemäß Anspruch 1, wobei die eine oder mehreren zusätzlichen Polyole in der (ii) Mischung von Polyolen ein zweiwertiges Polyol oder ein dreiwertiges Polyol beinhalten.

7. Härtbare wässrige Zusammensetzung gemäß Anspruch 1, wobei die (iii) azetidiniumgruppenhaltigen Harze aus den Aminoamiden von Epihalogenhydrin ausgewählt sind.

8. Härtbare wässrige Zusammensetzung gemäß Anspruch 1, wobei das (iv) eine oder die mehreren Kohlenhydrate aus einem reduzierenden Zucker, einer Stärke oder einem Maltodextrin ausgewählt sind.

9. Härtbare wässrige Zusammensetzung gemäß Anspruch 1, wobei das Verhältnis der Anzahl der Äquivalente der Carbonsäuregruppen oder Salze davon in der (i) einen oder den mehreren Polysäuren zu der Gesamtzahl der Äquivalente der Hydroxylgruppen in der (ii) Mischung von zwei oder mehr Polyolen 1 : 0,2 bis 1 : 1 beträgt.

10. Ein Verfahren zum Behandeln, Beschichten oder Imprägnieren von Fasern und faserigen Artikelsubstraten, beinhaltend das Bilden einer härtbaren wässrigen Zusammensetzung, die Folgendes beinhaltet:
Vermischen der Folgenden mit Wasser oder einem oder mehreren wässrigen Lösungsmitteln: (i) eine oder mehrere Polysäuren, die mindestens zwei Carbonsäuregruppen oder Salze davon beinhalten; (ii) eine Mischung von zwei oder mehr Polyolen, die Pentaerythritol umfassen, und einem oder mehreren zusätzlichen Polyolen, die mindestens zwei Hydroxylgruppen aufweisen; (iii) zu 0,5 bis 12 Gew.-%, bezogen auf das Gesamtfeststoffgewicht der härtbaren wässrigen Zusammensetzungen, ein oder mehrere azetidiniumgruppenhaltige Harze und (iv) zu 30 bis 70 Gew.-%, bezogen auf das Gesamtfeststoffgewicht der härtbaren wässrigen Zusammensetzungen, ein oder mehrere Kohlenhydrate, wobei das Verhältnis der Anzahl der Äquivalente der Carbonsäuregruppen oder Salze davon in der (i) einen oder den mehreren Polysäuren zu der Gesamtzahl der Äquivalente der Hydroxylgruppen in der (ii) Mischung von zwei oder mehr Polyolen 1 : 0,01 bis 1 : 10 beträgt; In-Kontakt-Bringen des Substrats mit der härtbaren wässrigen Zusammensetzung oder alternativ Applizieren der härtbaren wässrigen Zusammensetzung auf das Substrat; und Erhitzen der härtbaren wässrigen Zusammensetzung bei einer Temperatur von 100 °C bis 400 °C.

## Revendications

1. Une composition aqueuse durcissable comprenant (i) un polyacide ou plus comprenant au moins deux groupes acide carboxylique, ou sels de ceux-ci ; (ii) un mélange de deux polyols ou plus incluant du pentaérythritol et d'un polyol supplémentaire ou plus ayant au moins deux groupes hydroxyle ; (iii) de 0,5 à 12 % en poids, rapporté au poids total de solides des compositions aqueuses durcissables, d'une résine ou plus contenant un groupe azétidinium ; et (iv) de 25 à 70 % en poids, rapporté au poids total de solides des compositions aqueuses durcissables, d'un glucide ou plus, dans laquelle le rapport du nombre d'équivalents des groupes acide carboxylique ou sels de ceux-ci dans cet un polyacide ou plus (i), au nombre total d'équivalents des groupes hydroxyle dans ce mélange de deux polyols ou plus (ii) va de 1/0,01 à 1/10.

2. La composition aqueuse durcissable telle que revendiquée dans la revendication 1, la composition comprenant en sus (v) un accélérateur ou plus contenant du phosphore.

3. La composition aqueuse durcissable telle que revendiquée dans la revendication 1, dans laquelle cet un polyacide ou plus (i) comprend une combinaison d'au moins un polyacide polymérique et d'un acide polybasique organique.

4. La composition aqueuse durcissable telle que revendiquée dans la revendication 1, dans laquelle cet un polyacide ou plus (i) est un polyacide polymérique choisi parmi l'acide polyacrylique (pAA), et des copolymères en solution aqueuse de pAA.

5. La composition aqueuse durcissable telle que revendiquée dans la revendication 1, comprenant (iii) de 1 à 5 % en poids, rapporté au poids total de solides de la composition aqueuse durcissable, d'une résine ou plus contenant un groupe azétidinium.

6. La composition aqueuse durcissable telle que revendiquée dans la revendication 1, dans laquelle cet un polyol supplémentaire ou plus dans ce mélange de polyols (ii) comprend un polyol dihydrique ou un polyol trihydrique.

7. La composition aqueuse durcissable telle que revendiquée dans la revendication 1, dans laquelle ces résines contenant un groupe azétidinium (iii) sont choisies parmi les aminoamides d'épihalohydrine.

8. La composition aqueuse durcissable telle que revendiquée dans la revendication 1, dans laquelle cet un glucide ou plus (iv) est choisi parmi un sucre réducteur, un amidon ou une maltodextrine.

9. La composition aqueuse durcissable telle que revendiquée dans la revendication 1, dans laquelle le rapport du nombre d'équivalents des groupes acide carboxylique ou sels de ceux-ci dans cet un polyacide ou plus (i), au nombre total d'équivalents des groupes hydroxyle dans ce mélange de deux polyols ou plus (ii) va de 1/0,2 à 1/1.

10. Un procédé pour traiter, enduire ou imprégner des fibres et substrats d'article fibreux comprenant la formation d'une composition aqueuse durcissable comprenant le fait d'associer dans un mélange avec de l'eau ou un solvant aqueux ou plus (i) un polyacide ou plus comprenant au moins deux groupes acide carboxylique, ou sels de ceux-ci ; (ii) un mélange de deux polyols ou plus incluant du pentaérythritol et d'un polyol supplémentaire ou plus ayant au moins deux groupes hydroxyle ; (iii) de 0,5 à 12 % en poids, rapporté au poids total de solides des compositions aqueuses durcissables, d'une résine ou plus contenant un groupe azétidinium, et (iv) de 30 à 70 % en poids, rapporté au poids total de solides des compositions aqueuses durcissables, d'un glucide ou plus, dans lequel le rapport du nombre d'équivalents des groupes acide carboxylique, ou sels de ceux-ci dans cet un polyacide ou plus (i) au nombre total d'équivalents desdits groupes hydroxyle dans ce mélange de deux polyols ou plus (ii) va de 1/0,01 à 1/10 ;
la mise en contact du substrat avec la composition aqueuse durcissable ou, de manière alternative, l'application de la composition aqueuse durcissable sur le substrat ; et
le chauffage de la composition aqueuse durcissable à une température allant de 100 °C à 400 °C.
